(19) **Europäisches Patentamt / European Patent Office / Office européen des brevets**

(11) **EP 1 291 110 B1**

(12) # EUROPÄISCHE PATENTSCHRIFT

(45) Veröffentlichungstag und Bekanntmachung des Hinweises auf die Patenterteilung:
**10.07.2013   Patentblatt 2013/28**

(51) Int Cl.:
*B23H 7/06* (2006.01)        *B23H 7/04* (2006.01)
*B23H 7/10* (2006.01)

(21) Anmeldenummer: **01121855.9**

(22) Anmeldetag: **11.09.2001**

(54) **Funkenerosives Verfahren und Vorrichtung zur Mehrdrahtbearbeitung**

Method and apparatus for multiple wire electrerosion machining

Procédé et appareil pour usinage par électroérosion avec plusieurs électrodes

(84) Benannte Vertragsstaaten:
**CH DE ES FR GB IT LI**

(43) Veröffentlichungstag der Anmeldung:
**12.03.2003   Patentblatt 2003/11**

(73) Patentinhaber: **Agie Charmilles SA**
**6616 Losone (CH)**

(72) Erfinder:
• **Beltrami, Ivano, Dr. Phys.**
  **6654 Cavigliano (CH)**
• **Budin, Josef**
  **6648 Minusio (CH)**
• **Nagel, Wolfgang**
  **6653 Verscio (CH)**

(74) Vertreter: **Jacoby, Georg et al**
**Samson & Partner**
**Widenmayerstrasse 5**
**80538 München (DE)**

(56) Entgegenhaltungen:
**US-A- 5 237 145      US-A- 5 451 737**
**US-A- 5 922 220**

EP 1 291 110 B1

**Beschreibung**

Die Erfindung betrifft ein Verfahren zum funkenerosiven Bearbeiten eines Werkstückes, wobei die Bearbeitung mit wenigstens zwei Drahtelektroden durchgeführt wird (sogenannte Mehrdrahtbearbeitung), sowie eine entsprechende Drahterosionsmaschine.

Bei funkenerosiven Drahtschneidemaschinen wird die Form des zu fertigenden Werkstückes erzeugt, indem Drahtelektrode und Werkstück so gegeneinander verfahren werden, daß die erwünschte (im NC-Programm festgelegte) Kontur entsteht. Die Drahtelektrode ist hierbei ein Endlosdraht, der kontinuierlich an der Wirkstelle vorbeigeführt wird, und dadurch ständig erneuert wird. Für die Bearbeitung kommt es zum Erreichen bestimmter Bearbeitungsziele (Genauigkeit, Oberflächenbeschaffenheit der Schnittfläche, etc.) u.a. stark auf die verwendete Drahtelektrode an. Daher ist es oftmals zweckmäßig, während einer komplexeren Bearbeitungen unterschiedliche Drahtelektroden zu verwenden. Durch spezifische Auswahl unterschiedlicher Elektrodensorten können verschiedene Bearbeitungsvorgänge hinsichtlich des Erosionsvorganges optimiert werden, oder es können einfach unterschiedliche Geometrien geschnitten werden. Auf konventionellen Drahterodiermaschinen ist es möglich, verschiedene Arbeitsschritte mit unterschiedlichen Drahtelektroden auszuführen. Dazu muß der Operator jedoch manuell die Drahtvorratsspule ersetzen und das Programm mit passenden Technologieparameter aufrufen. Die Bearbeitung mit mehreren Drahtsorten war deshalb bislang eine Ausnahme; die jeweilige Bearbeitungsaufgabe wurde im Allgemeinen mit einem einzigen Draht ausgeführt. Seit einigen Jahren sind jedoch bereits Drahterodiermaschinen mit einer automatischen Drahtwechseleinrichtung bekannt, wie sie beispielsweise in der japanischen Offenlegungsschrift JP 56-069037 offenbart ist. Ein offensichtlicher Vorteil einer solchen Drahterodiermaschine liegt in der erhöhten Autonomie. So können für die Bearbeitung des Werkstückes die verschiedenen Drahtsorten im Rahmen einer unbeaufsichtigten Bearbeitung eingesetzt werden. Durch den automatischen Drahtwechsel werden die Bearbeitungszeit und damit auch die Fertigungskosten reduziert.

Es gibt diverse Gründe die zur Wahl der einen oder der anderen Drahtsorte führen können, doch das wichtigste Bestimmungskriterium ist der kleinste Innenradius $r_{I_{min}}$ der zu schneidenden Kontur. Dieser ergibt sich aus der Summe des halben Drahtdurchmessers und der Funkenspaltbreite wie folgt:

$$r_{I_{min}} = \frac{d}{2} + s_{gap} \quad (1)$$

Daraus folgt umgekehrt, daß der Drahtdurchmesser bei vorgegebenem kleinsten Innenradius wie folgt gewählt werden muß:

$$d = 2 \cdot (r_{I_{min}} - s_{gap}) \quad (2)$$

Die Verwendung einer automatischen Drahtwechseleinrichtung und diverser Drahtelektroden im Rahmen verknüpfter Bearbeitungen stellt jedoch neue Probleme, insbesondere was die Auswirkung auf die zu schneidende Kontur betrifft. Die Druckschrift US 5'237'145, welches als nächstliegender Stand der Technik anzusehen ist, beschreibt hierzu ein Drahterodierverfahren, bei dem eine erste Drahtelektrode aus einer Mehrzahl von auf Drahtvorratsrollen bereitstehenden Drahtelektroden ausgewählt wird, die ausgewählte Drahtelektrode eingefädelt und die funkenerosive Bearbeitung aufgenommen wird, die erste Drahtelektrode durch eine zweite Drahtelektrode mit unterschiedlichem Durchmesser ersetzt wird und für die zweite Drahtelektrode eine Anpassung der zu schneidenden Kontur und der Funkenspaltbreite erfolgt. Konturanpassung ist eine durch den unterschiedlichen Drahtdurchmesser bedingte Offset-Korrektur quer zur jeweiligen Schnittrichtung. Die ganze Kontur wird also entsprechend "verkleinert" oder "vergrössert". Weitergehende Korrekturen sind aus dieser Druckschrift jedoch nicht bekannt.

Die US-A-5 922 220 zeigt eine Drahterosionsvorrichtung mit einer Kombination aus einer offenen V-Drahtführung und einer geschlossenen Toroidführung. Für sehr kleine Konikwinkel wird die Drahtelektrode allein von der offenen V-Führung geführt. Steigt der Konikwinkel, so legt sich die Drahtelektrode am Toroiden der geschlossenen Toroidführung an. Die Drahterosionsvorrichtung berechnet eine Korrektur dieses Konikwinkels, und zwar bei und ohne Kontakt der Drahtelektrode mit der geschlossenen Toroidführung. Diese Korrektur wirkt stets in Richtung des Versatzes des unteren zum oberen Drahtführungskopfes. Die US-A-5 451 737 berechnet keine solche Korrektur, sondern mißt sie mittels eines Drahtlagesensors.

Es ist ein Ziel der vorliegenden Erfindung, die Bearbeitungsgenauigkeit bei einer Mehrdrahtbearbeitung eines Bearbeitungsobjektes auf einer Drahterodiermaschine zu verbessern.

Die Erfindung erreicht dieses Ziel jeweils mit den Gegenständen der Ansprüche 1 und 17. Bevorzugte Ausgestaltungen der Erfindung sind in den Unteransprüchen beschrieben.

Die Erfindung, weitere Merkmale der Erfindung sowie Vorteile der Erfindung werden nunmehr anhand bevorzugter Ausgestaltungen der Erfindung mit Bezug auf die beigefügte Zeichnung näher erläutert.

Fig. 1   zeigt eine schematische Teilansicht eines oberen Drahtführungskopfes, in dem der Verlauf einer eingespannten Drahtelektrode ersichtlich wird.

Fig. 1b   zeigt einen Ausschnitt des in Fig. 1a gezeigten Drahtführungskopfes, und zwar die Drahtführung.

Fig. 2a, b   zeigen jeweils zwei schematische perspektivische Ansichten eines Arbeitsraumes, eine zwischen zwei Drahtführungsköpfen gespannte Drahtelektrode und je eine Zentrierstelle mit und ohne Aufspannsystem zum Zentrieren der Drahtelektrode.

Fig. 3   zeigt eine exemplarische Tabelle, in der für verschiedene Drahtelektroden bestimmte Elektrodenparameter und ein etwaiger Versatz zu einer verknüpften Drahtelektrode aufgelistet sind.

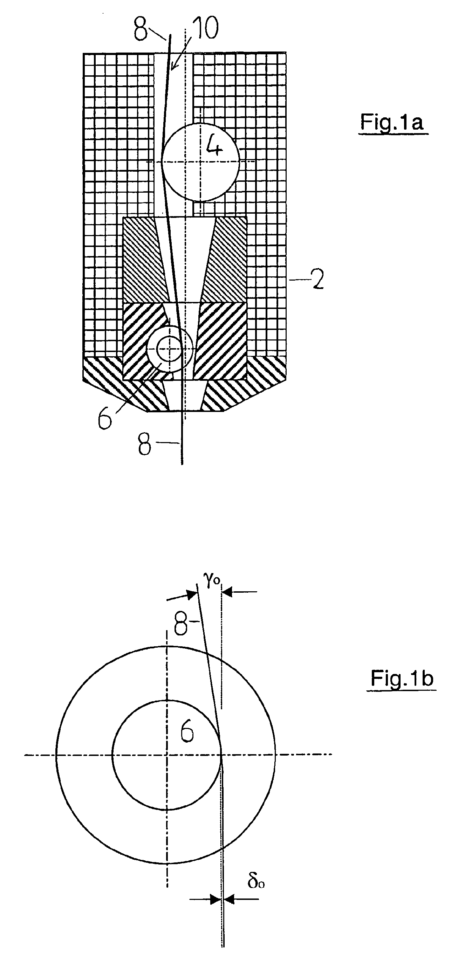

Figur 1a zeigt schematisch einen oberen Drahtführungskopf 2, der ein Stromzufuhrmittel 4 sowie eine Drahtführung 6 trägt. Die Drahtführung 6 kann beispielsweise eine offene Drahtführung, wie eine V-Führung sein. Im eingespannten Zustand verläuft eine Drahtelektrode 8 durch einen Kanal 10 innerhalb des Drahtführungskopfes 2. Damit die Drahtelektrode 8 insbesondere bei einer offenen Drahtführung (V-förmig) sicher an dieser anliegt und mit festem Kontakt zu dieser geführt wird, muß die Bearbeitungselektrode 8 unter einem gewissen minimalen Eintrittswinkel $\gamma_0$ bezüglich der Vertikalen an die Drahtführung 6 herangeführt werden. In Fig. 1b ist der Eintrittswinkel $\gamma_0$ eingezeichnet. Dieser ist der Winkel zwischen der Vertikalen, die an der Anlagefläche der Drahtführung anliegt, und dem Drahtverlauf der Drahtelektrode 8 oberhalb der Drahtführung 6. In der Praxis wird dieser minimale Eintrittswinkel $\gamma_0$ dadurch eingestellt, daß die Anlagefläche der in Drahtvorschubrichtung stromauf liegenden Stromzuführung 4 leicht versetzt zur Anlagefläche der Drahtführung 6 ist (siehe Figur la). Dieser Eintrittswinkel $\gamma_0$ ist demnach ein fester Winkel, der sich aus der Anordnung von Stromzuführung 4 und Drahtführung 6 im Drahtführungskopf 2 ergibt.

Aufgrund unterschiedlicher Eintrittswinkel $\gamma_0$, Drahtdurchmesser, Elastizitätsmodule und sonstiger Eigenschaften der Drahtelektrode 8 sowie unterschiedlicher Drahtzugkräfte auf die eingespannte Drahtelektrode 8 ergeben sich leichte Unterschiede in den Krümmungen der Drahtelektrode 8 unmittelbar nach deren Ablösepunkt von der Drahtführung 6, was sich in einer bestimmten in Fig. 1b gezeigten Verschiebung $\delta_0$ von der Vertikalen äußert, die an diesem Ablösepunkt anliegt. Mit anderen Worten ist die Krümmung der Drahtelektrode etwas geringer als die Krümmung der Drahtführung, wobei in der Praxis die volle Verschiebung $\delta_0$ bereits wenige Millimeter nach Verlassen der Drahtführung 6 erreicht ist. Somit ist diese Verschiebung $\delta_0$ über die gesamte Werkstückhöhe konstant.

Die unterschiedlichen Verschiebungen $\delta_0$ führen zu unterschiedlichen Positionen der eingespannten Drahtelektroden 8 bei der Mehrdrahtbearbeitung in Höhe des Werkstückes bei identischer Position des Drahtführungskopfes 2. Wird dieser Unterschied bei einem Wechsel der Drahtelektrode 8 nicht berücksichtigt, so tritt eine Ungenauigkeit der Bearbeitung auf, was die Erfindung zu vermeiden sucht. Selbstverständlich ist anstelle der beschriebenen offenen Drahtführung 6 auch jede andere Führung möglich, bei der ein Eintrittswinkel $\gamma_0$ bezüglich einer Drahtführung zu unterschiedlichen Verschiebungen $\delta_0$ bei verschiedenen Drahtelektroden 8 führt.

Hierzu ermittelt sie nacheinander die verschiedenen Positionen der verschiedenen bei der Mehrdrahtbearbeitung verwendeten Drahtelektroden 8 in Höhe des Werkstückes oder zumindest irgendwo zwischen der oberen und der unteren Drahtführung 6 bzw. die unterschiedlichen Verschiebungen $\delta_0$.

Die Verschiebung $\delta_0$ kann gemäß folgender Formeln berechnet werden:

$$\delta_o = \frac{\gamma_o}{2} \sqrt{\frac{E \cdot I}{F}} \qquad \text{mit} \quad I = \frac{d^4 \cdot \pi}{64}$$

wobei in der Formel $\gamma_0$ der Eintrittswinkel der Drahtelektrode 8 in die Drahtführung 6 ist, E das Elastizitätsmodul ist, I das aus dem Drahtdurchmesser abgeleitete axiale Flächenmoment zweiten Grades ist und d der Drahtdurchmesser ist.

Aus den einzelnen berechneten Verschiebungen $\delta_0$ läßt sich der Versatz der Positionen der Drahtmittelpunkte in Höhe des Werkstückes berechnen, indem eine Drahtelektrode 8 als Bezugselektrode herangezogen wird (üblicherweise die Drahtelektrode, mit der die Mehrdrahtbearbeitung gestartet wird) und die Differenz der berechneten Verschiebungen $\delta_0$ der übrigen Drahtelektroden 8 bezüglich der Verschiebung dieser Drahtelektrode 8 bestimmt wird (oder aber die Differenzen der berechneten Verschiebungen $\delta_0$ von bei der Bearbeitung aufeinander folgenden Drahtelektroden 8). Bei der anschließenden Mehrdrahtbearbeitung des Werkstückes wird nach einem Drahtelektrodenwechsel der für die neue Drahtelektrode 8 bestimmte Versatz herangezogen und damit die Bahnführung der neuen Drahtelektrode 8 korrigiert. Die rechnerische Bestimmung und Kompensation der Distanz zwischen den Drahtmittelpunkten führt bereits zu einer merklichen Verbesserung der Fertigungsgenauigkeit bei einer Mehrdrahtbearbeitung.

Es hat sich weiterhin herausgestellt, daß unterschiedliche Drahtelektroden unterschiedliche Charakteristika haben, die zu unterschiedlichen Verschiebungen $\delta_0$ führen. Selbst gleichartige Drahtelektroden aus unterschiedlichen Lieferungen, bei denen man eigentlich davon ausgehen würde, daß ihr Elastizitätsmodul, etc. ebenfalls gleich ist, haben spürbar unterschiedliche Werkstoffeigenschaften. So haben experimentelle Untersuchungen gezeigt, daß beispielsweise die Biegesteifigkeit zweier gleichartiger Drahtelektroden um 20% und mehr variieren kann, wobei das Elastizitätsmodul E in starkem Maße für diese Streuung verantwortlich ist. Schließlich ändert sich auch der an und für sich maschinenspezifische und konstante Eintrittswinkel $\gamma_0$ aufgrund des Verschleiß der Stromzuführung 4 und der Fertigungstoleranz bei der Montage des Drahtführungskopfs 2. Der Verschleiß der Stromzuführung 4 führt beispielsweise zu einer Verschiebung des Auflagepunktes der Drahtelektrode 8 an der Stromzuführung 4 um bis zu 1 mm. Die Berechnung des Versatzes aufgrund gespeicherter Werkstoffparameter ist also lediglich eine Näherung.

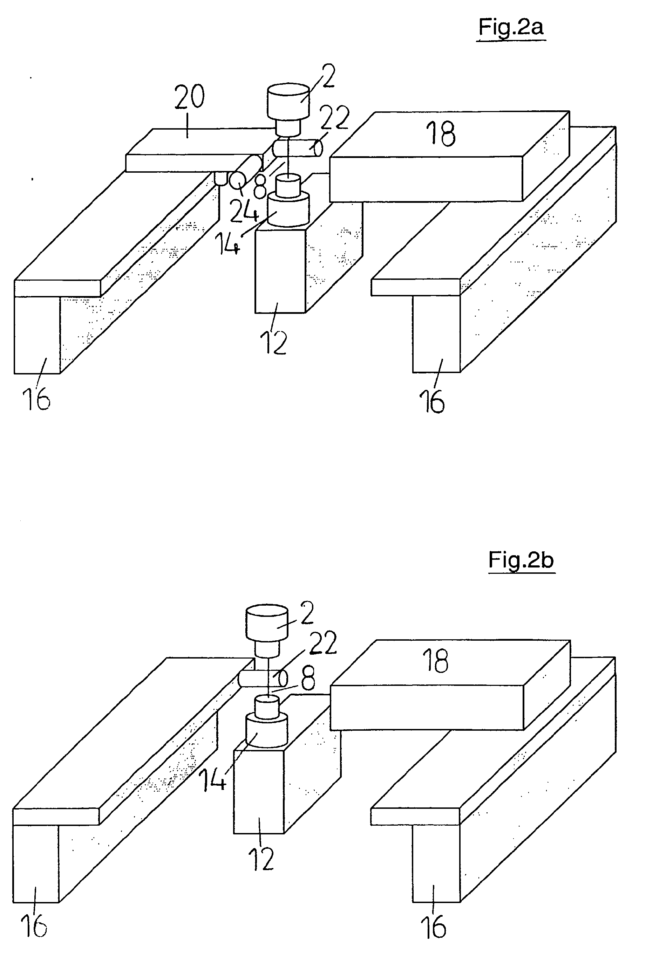

Zur weiteren Steigerung der Fertigungsgenauigkeit wird daher der Versatz diverser Drahtelektroden 8 gemessen. Dies kann im Rahmen mehrerer Zentrierzyklen erfolgen, bei denen jeweils die Position eines Mittelpunktes der an einer Mehrdrahtbearbeitung beteiligten Drahtelektroden 8 durch Anfahren einer gemeinsamen Zentrierstelle im Arbeitsraum ermittelt wird. Ein solcher Zentrierzyklus wird nunmehr anhand der Figuren 2a und b näher erläutert. In der Figur 2a ist der obere Drahtführungskopf 2, ein unterer, von einem unteren Drahtführungsarm 12 getragener Drahtführungskopf 14, die zwischen diesen Drahtführungsköpfen 2 und 14 verlaufende Drahtelektrode 8, ein Arbeitstisch 16 in Form eines Rahmens, ein auf dem Arbeitstisch 16 aufgespanntes Werkstück 18 sowie eine mittels einer Aufspanneinrichtung 20 auf dem Arbeitstisch aufgespannte Zentrierstelle in Form zweier zylinderförmiger Zentrierstifte 22 und 24 gezeigt, die senkrecht zueinander ausgerichtet sind, beispielsweise in Richtung der beiden Hauptachsen X und Y der Drahterodiermaschine. Die Fig. 2b zeigt eine leicht geänderte Situation, in der die Zentrierstelle in Form eines einzigen zylinderförmigen Stiftes 22 unmittelbar am Arbeitstisch 16 angebracht ist.

Die Erkennung der Drahtelektrode 8 an der Zentrierstelle kann z.B. durch elektrisches Antasten erfolgen. Dieses Verfahren wird bereits in Zusammenhang mit den bekannten Drahtausrichtzyklen angewendet. Hierzu wird auf den Stand der Technik verwiesen. Alternativ zum elektrischen Antasten kommen optische Erkennungsmittel in Frage, beispielsweise eine Lasermeßzelle, wie Sie häufig zur Ausmessung von Fräswerkzeugen eingesetzt wird. Eine miniaturisierte Meßzelle könnte sogar im Drahtführungskopf 2 integriert sein, beispielsweise kurz unterhalb der Drahtführung 6. Eine solche Meßzelle auf optischer Basis ist in der DE 28 26 270 und der EP 0 312 056 beschrieben, deren Inhalt hiermit durch Bezugnahme vollständig in die vorliegende Anmeldung aufgenommen ist.

Ursache für die Krümmung der Drahtelektrode 8 und die damit einhergehende Verschiebung $\delta_0$ ist der Drahtverlauf innerhalb der Drahtführungsköpfe 2 und 14 vor der Drahtführung 6 (genauer gesagt, im oberen Drahtführungskopf 2 in Drahtvorschubrichtung stromauf der Drahtführung 6 und im unteren Drahtführungskopf 14 in Drahtvorschubrichtutng stromab der Drahtführung). Dieser Drahtverlauf ist durch die Anordnung eines letzten Führungselementes vor der jeweiligen Drahtführung 6 gegeben. Dieses Führungselement sorgt dafür, daß die Drahtelektrode 8 immer an der Drahtführung 6 anliegt. In dem in Figur 1a gezeigten Beispiel ist das Führungselement die Stromführung 4. Alternativ kann jedoch jede andere Hilfsführung eingesetzt werden.

Gewöhnlich muß die Position der Drahtelektroden 8 bezüglich der Zentrierstelle lediglich in einer der Achsrichtungen gemessen werden. Die andere Richtung ist meistens vernachlässigbar. Das Führungselement und die Drahtführung 6 sind in einer vorgegebenen Richtung zueinander versetzt angeordnet, um den Eintrittswinkel $\gamma_0$ sicherzustellen. Die Verschiebung $\delta_0$ wird nunmehr bevorzugt lediglich in dieser Richtung gemessen (bei der Stromzuführung 4 als Führungselement ist diese Richtung beispielsweise die Richtung ihrer Flächennormalen). Hierzu muß lediglich z.B. der Zentrierstift 22 angefahren werden. Um den Mittelpunkt der Drahtelektrode 8 in dieser Richtung zu messen, wird beispielsweise die Drahtelektrode 8 von vorne an den Zentrierstift 22 bis zum Kontakt angefahren, die entsprechende Position der Drahtführungsköpfe 2 und 14 in dieser Richtung ermittelt, dann die Drahtelektrode 8 von hinten an den Zentrierstift 22 bis zum Kontakt angefahren, die entsprechende Position der Drahtführungsköpfe 2 und 14 ermittelt und daraus der Mittelpunkt der Drahtelektrode 8 bzw. der Mittelpunkt des Zentrierstiftes 22 bestimmt. Dies wird mit den übrigen Drahtelektroden ebenso durchgeführt, woraus schließlich der Versatz zwischen zwei Drahtelektroden 8 aus den Differenzen der jeweiligen bestimmten Mittelpunkte abgeleitet wird.

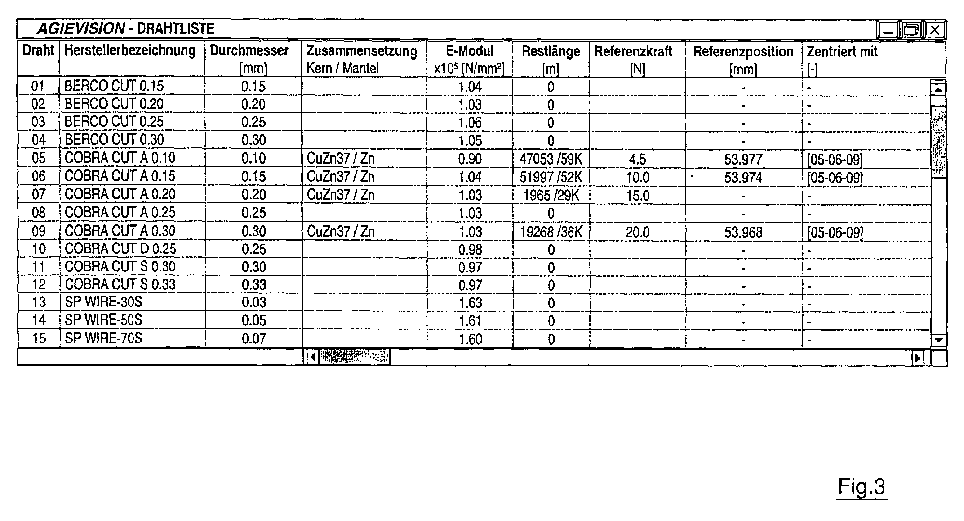

Der Zentrierzyklus findet dabei bevorzugt mit einer bestimmten Referenz-Drahtzugkraft $F_{Ref}$ statt. Dabei wird etwa diejenige Drahtzugkraft angelegt, die für die anstehende Mehrdrahtbearbeitung effektiv benötigt wird. Es können jedoch auch mehrere Zentrierzyklen mit unterschiedlichen Referenz-Drahtzugkräften über den Anwendungsbereich der jeweiligen Drahtelektrode durchgeführt werden. Die Ergebnisse können für die einzelnen Drahtelektroden nach deren Bezeichnung sortiert zusammen mit weiteren u.a. für die obige Berechnung relevanten Parametern, wie der Drahtdurchmesser, das Drahtmaterial, das Elastizitätsmodul, die Restlänge des Drahtes auf der Vorratsspule, die bei der Messung verwendete Referenz-Drahtzugkraft $F_{ref}$ gespeichert werden (siehe Tabelle der Figur 3, wobei dort anstelle des Versatzes der Drahtelektroden 8 bezüglich einer Referenz-Drahtelektrode 8 für jede Drahtelektrode 8 deren gemessener Drahtmittelpunkt bezüglich der Zentrierstelle unter der Spalte "Referenzposition" aufgelistet ist).

Bevorzugt verfügt die Steuerung hierzu über eine erweiterbare Tabelle mit allen auf dieser Drahterodiermaschine verwendbaren Drahtelektroden 8 bzw. sogar allen marktgängigen Drahtelektroden 8, welche der Benutzer zudem nach Belieben ergänzen kann, indem er weitere Drahtelektroden 8 eingeben kann, bzw. indem er zu den Drahtelektroden 8 weitere Angaben über deren chemische Zusammensetzung, elektrische und mechanische Materialkennwerte, insbesondere Zugfestigkeit, und eventuell weitere Hinweise zu den jeweiligen Eigenschaften machen kann. In der Tabelle kann dabei angegeben sein, welche Drähte aktuell miteinander zentriert sind. Hierzu ist in der Tabelle der Figur 3 in deren Spalte "Zentriert mit" beispielsweise angegeben, daß die Drahtelektroden mit den Nummern 05, 06 und 09 miteinander verknüpft sind.

Die Zentrierzyklen für die einzelnen Drahtelektroden 8 können so optimiert werden, daß einerseits die Meßunsicherheit minimiert und andererseits die Gesamtmeßzeit nicht zu lang wird. Beispielsweise können die Zentrierzyklen mit anderen Funktionen kombiniert werden, die beim Einrichten sowieso ausgeführt werden müssen, z.B. das Drahtausrichten oder das Antasten von Referenzpunkten. Dadurch erhöht sich der Aufwand für die Vorbereitung der Mehrdrahtbearbeitung nur geringfügig. Die Zentrierzyklen werden vorteilhaft soweit möglich automatisiert. Für die verbleibenden manuell vorzunehmenden Schritte (z.B. Aufsetzen des Spannsystems 20, etc.) kann die Steuerung (MMI/GUI) derart ausgestaltet sein, daß sie den Benutzer hierfür durch Ausgabe entsprechender Meldungen und Bereitstellung von Interaktionsmöglichkeiten über Dialogfenstern unterstützt.

Selbstverständlich ist das Messen des Versatzes über einen Zentrierzyklus aufwendiger und nimmt mehr Zeit in Anspruch als dessen Berechnung nach obigen Formeln, da für ersteres in der Regel ein Dialog mit dem Benutzer, das automatische Einfädeln der Drahtelektrode, das Anfahren der Zentrierstelle, das Bestimmen und das Speichern des Drahtmittelpunktes erforderlich ist, und das für jede einzelne Drahtelektrode. Durch das Messen des Versatzes werden jedoch auch die erwähnte Streuungen der Werkstoffparameter der Drahtelektroden 8, der aktuelle Verschleißzustand der Stromzuführungen und weitere, rechnerisch nicht erfaßbare Variablen berücksichtigt. Dieser Mehraufwand wird bei besonderen Genauigkeitsanforderungen toleriert.

Zudem kann die rechnerische Näherung des Versatzes und die Messung des Versatzes auch kombiniert werden, um beispielsweise eine Plausibilitätsprüfung für den gemessenen Versatz vorzunehmen. Fallen der berechnete und der gemessene Wert z.B. um mehr als $20\,\mu m$ auseinander, so muß ggf. eine neue Messung gestartet werden.

Die Messung der Positionen der Drahtelektroden 8 zueinander, die an einer verknüpften Mehrdrahtbearbeitung beteiligt sind, sollte selbstverständlich vor jeder genauigkeitsrelevanten Operation der Werkstückbearbeitung absolviert werden, d.h. beispielsweise bereits vor dem Anfahren der Referenzpunkte, was bei der Gesamtbearbeitung stets vor dem eigentlichen Erodierbetrieb erfolgt. So kann auch die Position des eingespannten Werkstückes beispielsweise mit der gerade eingespannten Drahtelektrode 8 durch Antasten des Werkstückes bestimmt werden, wobei das Werkstück anschließend mit einer anderen Drahtelektrode 8 bearbeitet wird. Auch hierzu ist es erforderlich, daß der Versatz dieser beiden Drahtelektroden 8 zueinander vorab bekannt ist.

Die CNC-Steuerung der Drahterodiermaschine ist ferner derart ausgestaltet, daß sie dem Benutzer die Möglichkeit gibt, für Mehrdrahtbearbeitungen diejenigen Bearbeitungsobjekte sozusagen miteinander zu verknüpfen, die mit verschiedenen Drahtelektroden 8 bearbeitet werden sollen. Zwecks Vereinfachung der Programmierung kann die Bearbeitung nämlich im Rahmen einer objektorientierten Datenstruktur definiert werden, beispielsweise in Objekte, wie Bearbeitung, Gruppe von Bearbeitungen, Geometrie, Schruppen, Schlichten, Feinschlichten, etc. Mit dieser Objektstruktur ist eine Verknüpfung extrem einfach herzustellen und gut überschaubar. Mit der Verknüpfung legt der Benutzer fest, daß diese Bearbeitungsobjekte einen geometrischen Bezug zueinander haben, d.h. der Versatz der dort zu verwendenden unterschiedlichen Drahtelektroden 8 berücksichtigt werden muß. Die einzelnen Bearbeitungsobjekte werden hierzu direkt miteinander verknüpft, beispielsweise das Objekt "Bearbeitung A" mit dem Objekt "Bearbeitung B", bei denen der Versatz der zugehörigen Drahtelektroden 8 nach deren Wechsel relevant ist. So müssen bei einer Mehrdrahtbearbeitung nicht unbedingt alle Drahtelektroden 8 eine Bearbeitung ausführen, die einen geometrischen Bezug der dabei bearbeiteten Konturen erfordert. Ein typisches Anwendungsbeispiel, bei dem der geometrische Bezug jedoch relevant ist, ist eine Matrize eines Folgeverbundwerkzeuges, die über mehrere Bearbeitungen mit unterschiedlichen Drahtelektroden 8 geschnitten wird. In diesem Fall ist der Drahtversatz der verwendeten Drahtelektroden 8 für die Genauigkeit der einzelnen Schnittkonturen von Bedeutung. Der Benutzer legt also bei Eingabe der zu schneidenden Geometrien fest, welche Schnittkonturen zur Erhöhung der Bearbeitungsgenauigkeit miteinander zu verknüpfen sind. Die CNC-Steuerung überwacht vor Start der Bearbeitung, ob für die miteinander verknüpften Schnittkonturen bereits ein gemeinsamer gültiger Zentrierzyklus durchgeführt worden ist und gibt bei gegenteiligem Ergebnis eine entsprechende Meldung aus.

Ein möglicher Dialog der Steuerung mit dem Benutzer beim Einrichten kann dabei wie folgt aussehen. Der Benutzer beginnt mit der Auswahl "Bearbeitung einrichten". Dann wählt er die auszuführenden Bearbeitungen aus und entscheidet über ein entsprechendes Dialogfenster, ob er im Rahmen einer verknüpften Mehrdrahtbearbeitung besonders genau arbeiten möchte, was die Durchführung eines Zentriervorgangs voraussetzt, oder nicht, wozu eine Berechnung des theoretischen Versatzes der beteiligten Drahtelektroden 8 genügt.

Darauf wird die Liste der gespeicherten Drahtsorten in einem Dialogfenster aufgeführt und der Benutzer wird aufgefordert, diejenigen Drahtelektroden 8 zu bezeichnen, die den gemeinsamen Zentriervorgang durchführen sollen. Die Steuerung untersucht daraufhin, ob die bezeichneten Drahtelektroden 8 bereits einen gültigen gemeinsamen Zentriervorgang ausgeführt haben bzw. ob bereits ein Teil der beteiligten Drahtelektroden zueinander zentriert ist. Wird dies von der Steuerung bejaht und erfolgt eine entsprechende Meldung an den Benutzer. Der Benutzer kann dann den alten Zentriervorgang entweder übernehmen, zurücksetzen oder durch einen neuen Zentriervorgang ersetzen. Wenn die Steuerung feststellt, daß die bezeichneten Drahtelektroden noch keinen gültigen gemeinsamen Zentrierzyklus ausgeführt haben, dann wird dieser sofort eingeleitet. Alternativ zur direkten Eingabe der zu verknüpfenden Bearbeitungsobjekte kann der Benutzer auch einfach die beteiligten Drahtelektroden 8 miteinander verknüpfen, wobei die Steuerung beim Drahtwechseln automatisch den Drahtversatz kompensiert. Gleichzeitig mit dem eingeleiteten Zentriervorgang wird auch der theoretische Versatz anhand der gespeicherten Drahtkennwerte und der verwendeten Drahtzugkraft berechnet, um die Plausibilität des Zentriervorganges zu überprüfen.

Wenn ein neuer Zentriervorgang nur für einen Teil der Drahtelektroden ausgeführt werden muß, so fragt ein Dialogfenster den Benutzer, ob der Meßstift versetzt wurde. Wenn ja, dann werden die Meßwerte aller früheren Zentrierzyklen zurückgesetzt. Ferner fragt die Steuerung den Benutzer nach Entfernen einer Drahtvorratsrolle und Ersetzen durch eine neue Rolle, ob die Funktion "Drähte zentrieren" für alle miteinander verknüpften Drahtelektroden mit der neu ausgetauschten Drahtelektrode erneut ausgeführt werden soll oder nicht, bzw. ob die Daten eines früheren Zentrierzyklus noch gültig sind oder nicht. Vorteilhaft ist die Drahtwechseleinrichtung mit Drahtdetektoren versehen, damit die Steuerung obige Abfrage automatisch initiert.

Die Erfindung kann ferner mit dem Nachschneideverfahren gemäß EP 0 578 018 B1 derselben Anmelderin kombiniert werden, bei dem die Steuerung selbständig erkennt, ob die Schnittbahn der ersten Drahtelektrode (Hauptschnitt) mit der zweiten und ggf. dritten Drahtelektrode übereinstimmt. Trifft dies zu, so können die Nachschnitte mit Bezug auf die vom Hauptschnitt erzeugte Kontur ausgeführt werden, wie dies in der zitierten Patentschrift beschrieben ist. Hierbei handelt es sich um einen Spezialfall, bei dem ein Zentriervorgang trotz Mehrdrahtbearbeitungen entfallen kann.

Hierzu gibt er beispielsweise, wie in der Tabelle der Figur 3 in deren Spalte "Zentriert mit" dargestellt ist, ein, daß die Drahtelektroden mit den Nummern 05, 06 und 09 miteinander verknüpft sind.

## Patentansprüche

1. Verfahren zum funkenerosiven Bearbeiten eines Werkstückes (18), wobei die Bearbeitung mit wenigstens zwei Drahtelektroden (8) durchgeführt wird, welches die folgenden Schritte umfaßt:

   - Ermitteln des Versatzes der beiden Positionen der wenigstens zwei Drahtelektroden (8) zueinander,
   - Korrigieren der Positionen der Drahtelektroden (8) nach Wechsel von einer Drahtelektrode (8) zur nächsten auf der Grundlage des zwischen diesen Drahtelektroden (8) ermittelten Versatzes;

   **dadurch gekennzeichnet, daß** durch eine Steuerungseinrichtung der Versatz ermittelt wird, den die Drahtelektroden (8) bei ihrer Einspannung aufgrund ihres Eintrittswinkels ($\gamma_0$), der durch einen Versatz senkrecht zum Verlauf der Drahtelektrode zwischen einer Hilfsführung (4) und einer Drahtführung (6) hervorgerufen wird, auf die zugehörige Drahtführung (6) und ihre unterschiedlichen Drahteigenschaften in Höhe des Werkstückes (18) einnehmen, und die Position der Drahtelektroden in Richtung des Versatzes der Hilfsführung (4) zur Drahtführung (6) korrigiert wird.

2. Verfahren nach Anspruch 1, bei dem der Versatz berechnet wird.

3. Verfahren nach Anspruch 2, bei dem der Versatz auf der Grundlage des Drahtdurchmessers, des Elastizitätsmoduls der Drahtelektrode (8), der Zugkraft auf die Drahtelektrode (8) und des Eintrittswinkel der Drahtelektrode (8) auf die Drahtführung (6) berechnet wird.

4. Verfahren nach Anspruch 3, bei dem der Versatz auf der Grundlage folgender Formeln berechnet wird:

$$\delta_o = \frac{\gamma_o}{2}\sqrt{\frac{E \cdot I}{F}} \qquad \text{mit} \qquad I = \frac{d^4 \cdot \pi}{64}$$

wobei $\gamma_0$ der Eintrittswinkel der Drahtelektrode (8) auf die Drahtführung (6) ist, E das Elastizitätsmodul der Drahtelektrode (8) ist, I das axiale Flächenmoment der Drahtelektrode (8) ist, F die Zugkraft auf die Drahtelektrode (8) ist, und d der Durchmesser der Drahtelektrode (8) ist.

5.  Verfahren nach einem der vorhergehenden Ansprüche, bei dem der Versatz gemessen wird.

6.  Verfahren nach Anspruch 5, bei dem der Versatz gemessen wird, indem

    a) eine erste Drahtelektrode (8) eingespannt wird,
    b) eine erste Position der Drahtelektrode (8) im Arbeitsraum bezüglich eines Bezugspunkts (22; 24) gemessen wird,
    c) eine zweite Drahtelektrode (8) eingespannt wird,
    d) eine zweite Position der zweiten Bearbeitungselektrode (8) im Arbeitsraum bezüglich des Bezugspunktes (22; 24) gemessen wird,
    e) der Versatz als Differenz zwischen der gemessenen ersten und der gemessenen zweiten Position bestimmt wird, und
    g) die Schritte a) bis e) ggf. für weitere Drahtelektroden (8) wiederholt werden.

7.  Verfahren nach Anspruch 6, bei dem als Bezugspunkt eine gemeinsame Zentrierstelle (22; 24) angefahren wird.

8.  Verfahren nach Anspruch 6 oder 7, bei dem die Positionen mittels einer im Drahtführungskopf (2) integrierten optischen Meßzelle gemessen werden.

9.  Verfahren nach einem der Ansprüche 5 bis 8, bei dem der Versatz der Drahtelektroden (8) bei konstanter Zugkraft auf die Drahtelektroden (8) gemessen wird.

10.  Verfahren nach einem der Ansprüche 5 bis 9, bei dem der mehrere Sätze für den Versatz der Drahtelektroden (8) für unterschiedliche Zugkräfte auf die Drahtelektrode (8) gemessen werden.

11.  Verfahren nach einem der Ansprüche 5 bis 10, bei dem der Versatz der Drahtelektroden (8) ausschließlich in Richtung des den Eintrittswinkel ($\gamma_0$) hervorrufenden Versatzes eines Führungselementes zur Drahtführung (6), insbesondere in Richtung senkrecht zur Anlagefläche der Drahtelektrode (8) an einer als Führungselement dienenden Stromzuführung (4), gemessen wird.

12.  Verfahren nach einem der Ansprüche 5 bis 7, bei dem auf der Basis eines gemessenen und eines berechneten Wertes für den Versatz eine Plausibilitätsüberprüfung für den gemessenen Wert durchgeführt wird.

13.  Verfahren nach einem der vorhergehenden Ansprüche, bei dem die Bearbeitung in einzelne Bearbeitungsobjekte unterteilt ist, und der Benutzer auswählen kann, welche Bearbeitungsobjekte miteinander zu verknüpfen sind, wobei eine Verknüpfung bedeutet, daß der Versatz der bei den verknüpften Bearbeitungsobjekten beteiligten Drahtelektroden (8) bei der Bearbeitung korrigiert werden soll.

14.  Verfahren nach einem der Ansprüche 5 bis 13, bei dem die gemessenen Positionen zusammen mit weiteren Drahtparametern, wie Durchmesser, Referenzkraft in einer Tabelle gespeichert werden.

15.  Verfahren nach Anspruch 14, bei dem der Benutzer in der Tabelle auswählen kann, welche der dort gespeicherten Drahtelektroden (8) für die Bearbeitung zu verknüpfen sind, wobei eine Verknüpfung bedeutet, daß der Versatz der verknüpften Drahtelektroden (8) bei der Bearbeitung korrigiert werden soll.

16.  Verfahren nach einem der Ansprüche 13 bis 15, bei dem beim Einrichten automatisch geprüft wird, ob die Positionen der verknüpften Drahtelektroden (8) zueinander bereits gemessen worden sind.

17.  Elektroerosionsmaschine, die für eine Mehrdrahtbearbeitung ausgestaltet ist, mit:

    - einem Führungskopf (2) zum Führen einer Bearbeitungselektrode (8),
    - einer Steuerungseinrichtung zum Steuern der Bahn des Führungskopfes (2), wobei die Steuerungseinrichtung derart ausgestaltet ist, daß sie den Versatz der Positionen von wenigstens zwei Drahtelektroden (8) zueinander ermittelt und die während der Werkstückbearbeitung nach Wechsel von einer Drahtelektrode (8) zur nächsten die Positionen des Führungskopfes (2) auf der Grundlage des zwischen diesen Drahtelektroden (8) ermittelten Versatzes korrigiert;

**dadurch gekennzeichnet, daß** die Steuerungseinrichtung derart ausgestaltet ist, daß sie den Versatz ermittelt, den die Drahtelektroden (8) bei ihrer Einspannung aufgrund ihres Eintrittswinkels ($\gamma_0$) auf eine zugehörige Drahtführung (6) und ihrer unterschiedlichen Drahteigenschaften in Höhe des Werkstückes (18) einnehmen, und die Position der Drahtelektroden in Richtung des Versatzes der Hilfsführung (6) korrigiert.

18. Vorrichtung nach Anspruch 17, bei dem die Steuerungseinrichtung zur Ausführung eines Verfahrens nach einem der Ansprüche 2 bis 16 ausgestaltet ist.


**Claims**

1. Method for the electrical discharge machining of a workpiece (18), said machining being carried out using at least two wire electrodes (8), which method comprises the following steps:

   - determination of the offset of the two positions of the at least two wire electrodes (8) relative to one another,
   - correction of the positions of the wire electrodes (8) after changing from one wire electrode (8) to the next based on the offset determined between these wire electrodes (8);

   **characterised in that** a control system determines the offset which the wire electrodes (8) adopt level with the workpiece (18) while they are clamped due to their entrance angle ($\gamma_0$) which is produced by an offset perpendicular to the course of the wire electrode between an auxiliary guide means (4) and a wire guide means (6), onto the associated wire guide means (6) and due to the different wire characteristics of the wire electrodes (8), and the position of the wire electrodes in the direction of the offset of the auxiliary guide means (4) relative to the wire guide means (6) is corrected.

2. Method according to claim 1, wherein the offset is calculated.

3. Method according to claim 2, wherein the offset is calculated based on the wire diameter, the modulus of elasticity of the wire electrode (8), the tensile force on the wire electrode (8) and the entrance angle of the wire electrode (8) onto the wire guide means (6).

4. Method according to claim 3, wherein the offset is calculated based on the following formulae:

$$\delta_o = \frac{\gamma_o}{2}\sqrt{\frac{E \cdot I}{F}} \quad \text{where} \quad I = \frac{d^4 \cdot \pi}{64}$$

   in which $\gamma_0$ is the entrance angle of the wire electrode (8) onto the wire guide means (6), E is the modulus of elasticity of the wire electrode (8), I is the axial area moment of the wire electrode (8), F is the tensile force on the wire electrode (8), and d is the diameter of the wire electrode (8).

5. Method according to any one of the preceding claims, wherein the offset is measured.

6. Method according to claim 5, wherein the offset is measured, in that

   a) a first wire electrode (8) is clamped,
   b) a first position of the wire electrode (8) in the working area with respect to a reference point (22; 24) is measured,
   c) a second wire electrode (8) is clamped,
   d) a second position of the second machining electrode (8) in the working area with respect to the reference point (22; 24) is measured,
   e) the offset is determined as the difference between the measured first position and the measured second position, and
   g) if appropriate, steps a) to e) are repeated for further wire electrodes (8).

**7.** Method according to claim 6, wherein a common centring area (22; 24) is reached as the reference point.

**8.** Method according to claim 6 or claim 7, wherein the positions are measured by an optical measuring cell integrated in the wire guidance head (2).

**9.** Method according to any one of claims 5 to 8, wherein the offset of the wire electrodes (8) is measured during a constant tensile force on the wire electrodes (8).

**10.** Method according to any one of claims 5 to 9, wherein the plurality of sets for the offset of the wire electrodes (8) is measured for different tensile forces on the wire electrode (8).

**11.** Method according to any one of claims 5 to 10, wherein the offset of the wire electrodes (8) is only measured in the direction of the offset, producing the entrance angle ($\gamma_0$), of a guide element for wire guidance (6), in particular in a direction perpendicular to the contact surface of the wire electrode (8) on a current supply (4) which serves as a guide element.

**12.** Method according to any one of claims 5 to 7, wherein a plausibility check for the measured value is carried out based on a measured value and on a calculated value for the offset.

**13.** Method according to any one of the preceding claims, wherein the machining procedure is divided into individual machining objects, and the user can choose which machining objects are to be linked together, a link meaning that the offset of the wire electrodes (8) which are involved in the linked machining objects is to be corrected during machining.

**14.** Method according to any one of claims 5 to 13, wherein the measured positions are stored in a table together with further wire parameters, such as diameter and reference force.

**15.** Method according to claim 14, wherein the user can select from the table which of the wire electrodes (8) stored therein are to be linked for the machining procedure, a link meaning that the offset of the linked wire electrodes (8) is to be corrected during machining.

**16.** Method according to any one of claims 13 to 15, wherein during the setup, a check is automatically carried out to ascertain whether the positions of the linked wire electrodes (8) relative to one another have already been measured.

**17.** Electrical discharge machine, configured for multiple wire machining, comprising:

- a guide head (2) for guiding a machining electrode (8),
- a control system for controlling the path of the guide head (2), said control system being configured such that it determines the offset of the positions of at least two wire electrodes (8) relative to one another and corrects the positions of the guide head (2) based on the offset determined between these wire electrodes (8) during machining of the workpiece after changing from one wire electrode (8) to the next;

**characterised in that** the control system is configured such that it determines the offset which the wire electrodes (8) adopt level with the workpiece (18) while they are clamped due to their entrance angle ($\gamma_0$) onto an associated wire guide means (6) and due to their different wire characteristics, and it corrects the position of the wire electrodes in the direction of the offset of the auxiliary guide means (6).

**18.** Device according to claim 17, wherein the control system is configured to implement a method according to any one of claims 2 to 16.

**Revendications**

**1.** Procédé servant à usiner par électro-érosion une pièce à usiner (18), l'usinage étant réalisé avec au moins deux fils-électrodes (8), lequel procédé comprend les étapes suivantes consistant à :

- déterminer le décalage entre les deux positions l'une par rapport à l'autre des deux fils-électrodes (8) ou plus ;
- corriger les positions des fils-électrodes (8) en passant d'un fil-électrode (8) au fil-électrode qui suit sur la base du décalage déterminé entre lesdits fils-électrodes (8),

**caractérisé en ce qu'**un système de commande détermine le décalage que les fils-électrodes (8) adoptent lors de leur serrage du fait de leur angle d'entrée ($\gamma_0$), qui est entraîné par un décalage de manière perpendiculaire par rapport au tracé du fil-électrode entre un guidage auxiliaire (4) et un guide-fil (6), sur le guide-fil (6) associé et dans le cadre de leurs caractéristiques différentes respectives à hauteur de la pièce à usiner (18), et **en ce que** la position des fils-électrodes est corrigée dans la direction du décalage du guidage auxiliaire (4) en direction du guide-fil (6).

2. Procédé selon la revendication 1, dans le cadre duquel le décalage est calculé.

3. Procédé selon la revendication 2, dans le cadre duquel le décalage est calculé sur la base du diamètre du fil, du module d'élasticité du fil-électrode (8), de la force de traction exercée sur le fil-électrode (8) et de l'angle d'entrée du fil-électrode (8) sur le guide-fil (6).

4. Procédé selon la revendication 3, dans le cadre duquel le décalage est calculé sur la base des formules qui suivent :

$$\delta_o = \frac{\gamma_o}{2}\sqrt{\frac{E \cdot I}{F}} \qquad \text{avec} \qquad I = \frac{d^4 \cdot \pi}{64}$$

où $\gamma_0$ représente l'angle d'entrée du fil-électrode (8) sur le guide-fil (6), E représente le module d'élasticité du fil-électrode (8), I représente le moment de surface axiale du fil-électrode (8), F représente la force de traction exercée sur le fil-électrode (8) et d représente le diamètre du fil-électrode (8).

5. Procédé selon l'une quelconque des revendications précédentes, dans le cadre duquel le décalage est mesuré.

6. Procédé selon la revendication 5, dans le cadre duquel le décalage est mesuré en ce

a) qu'un premier fil-électrode (8) est serré,
b) qu'une première position du fil-électrode (8) est mesurée dans la chambre de travail par rapport à un point de référence (22 ; 24),
c) qu'un deuxième fil-électrode (8) est serré,
d) qu'une deuxième position de la deuxième électrode d'usinage (8) est mesurée dans la chambre de travail par rapport au point de référence (22 ; 24),
e) que le décalage est déterminé en tant que différence entre la première position mesurée et la deuxième position mesurée, et
g) les étapes a) à e) sont répétées éventuellement pour d'autres fils-électrodes (8).

7. Procédé selon la revendication 6, dans le cadre duquel un poste de centrage (22 ; 24) commun est approché en tant que point de référence.

8. Procédé selon la revendication 6 ou 7, dans le cadre duquel les positions sont mesurées au moyen d'une cellule de mesure optique intégrée dans la tête du guide-fil (2).

9. Procédé selon l'une quelconque des revendications 5 à 8, dans le cadre duquel le décalage des fils-électrodes (8) est mesuré pour une force de traction constante exercée sur les fils-électrodes (8).

10. Procédé selon l'une quelconque des revendications 5 à 9, dans le cadre duquel plusieurs jeux pour le décalage des fils-électrodes (8) sont mesurés pour diverses forces de traction exercées sur le fil-électrode (8).

11. Procédé selon l'une quelconque des revendications 5 à 10, dans le cadre duquel le décalage des fils-électrodes (8) est mesuré uniquement dans la direction du décalage, entraînant l'angle d'entrée ($\gamma_0$), d'un élément de guidage en direction du guide-fil (6), en particulier dans la direction de manière perpendiculaire par rapport à la surface d'appui du fil-électrode (8) au niveau d'une arrivée de courant (4) faisant office d'élément de guidage.

12. Procédé selon l'une quelconque des revendications 5 à 7, dans le cadre duquel un contrôle de plausibilité est effectué pour la valeur mesurée sur la base d'une valeur mesurée du décalage et sur la base d'une valeur calculée dudit décalage.

**13.** Procédé selon l'une quelconque de revendications précédentes, dans le cadre duquel l'usinage est divisé en divers objets d'usinage, et dans le cadre duquel l'utilisateur est en mesure de choisir les objets d'usinage qui doivent être combinés les uns aux autres, l'action de combiner signifiant que le décalage des fils-électrodes (8) participant dans le cas des objets d'usinage combinés doit être corrigé lors de l'usinage.

**14.** Procédé selon l'une quelconque des revendications 5 à 13, dans le cadre duquel les positions mesurées sont enregistrées dans un tableau conjointement avec d'autres paramètres relatifs aux fils, tels que le diamètre, la force de référence.

**15.** Procédé selon la revendication 14, dans le cadre duquel l'utilisateur peut sélectionner dans le tableau les fils-électrodes (8) enregistrés dans ce dernier, qui sont à combiner pour l'usinage, l'action de combiner signifiant que le décalage des fils-électrodes (8) combinés doit être corrigé lors de l'usinage.

**16.** Procédé selon l'une quelconque des revendications 13 à 15, dans le cadre duquel on vérifie automatiquement lors de la mise en place si les positions des fils-électrodes (8) combinés les uns par rapport aux autres ont déjà été mesurées.

**17.** Machine d'électro-érosion, configurée pour un usinage avec plusieurs fils, comprenant :

- une tête de guidage (2) servant à guider une électrode d'usinage (8) ;
- un système de commande servant à commander la trajectoire de la tête de guidage (2), le système de commande étant configuré de telle manière qu'il détermine le décalage des positions d'au moins deux fils-électrodes (8) l'une par rapport à l'autre et qu'il corrige, lors de l'usinage de la pièce à usiner, en passant d'un fil-électrode (8) au fil-électrode qui suit, les positions de la tête de guidage (2) sur la base du décalage déterminé entre lesdits fils-électrodes (8),

**caractérisée en ce que** le système de commande est configuré de telle manière qu'il détermine le décalage que les fils-électrodes (8) adoptent lors de leur serrage du fait de leur angle d'entrée ($\gamma_0$) sur un guide-fil (6) associé et dans le cadre de leurs caractéristiques différentes respectives à hauteur de la pièce à usiner (18), et qu'il corrige la position des fils-électrodes en direction du décalage du guidage auxiliaire (6).

**18.** Dispositif selon la revendication 17, dans le cadre duquel le système de commande est configuré aux fins de la mise en oeuvre d'un procédé selon l'une quelconque des revendications 2 à 16.

Fig.1a

Fig.1b

<u>Fig.2a</u>

<u>Fig.2b</u>

**AGIEVISION - DRAHTLISTE**    ⬜🔲✖

| Draht | Herstellerbezeichnung | Durchmesser [mm] | Zusammensetzung Kern / Mantel | E-Modul x10$^5$ [N/mm$^2$] | Restlänge [m] | Referenzkraft [N] | Referenzposition [mm] | Zentriert mit [-] |
|---|---|---|---|---|---|---|---|---|
| 01 | BERCO CUT 0.15 | 0.15 | | 1.04 | 0 | | - | - |
| 02 | BERCO CUT 0.20 | 0.20 | | 1.03 | 0 | | - | - |
| 03 | BERCO CUT 0.25 | 0.25 | | 1.06 | 0 | | - | - |
| 04 | BERCO CUT 0.30 | 0.30 | | 1.05 | 0 | | - | - |
| 05 | COBRA CUT A 0.10 | 0.10 | CuZn37 / Zn | 0.90 | 47053 /59K | 4.5 | 53.977 | [05-06-09] |
| 06 | COBRA CUT A 0.15 | 0.15 | CuZn37 / Zn | 1.04 | 51997 /52K | 10.0 | 53.974 | [05-06-09] |
| 07 | COBRA CUT A 0.20 | 0.20 | CuZn37 / Zn | 1.03 | 1965 /29K | 15.0 | - | - |
| 08 | COBRA CUT A 0.25 | 0.25 | | 1.03 | 0 | | - | - |
| 09 | COBRA CUT A 0.30 | 0.30 | CuZn37 / Zn | 1.03 | 19268 /36K | 20.0 | 53.968 | [05-06-09] |
| 10 | COBRA CUT D 0.25 | 0.25 | | 0.98 | 0 | | - | - |
| 11 | COBRA CUT S 0.30 | 0.30 | | 0.97 | 0 | | - | - |
| 12 | COBRA CUT S 0.33 | 0.33 | | 0.97 | 0 | | - | - |
| 13 | SP WIRE-30S | 0.03 | | 1.63 | 0 | | - | - |
| 14 | SP WIRE-50S | 0.05 | | 1.61 | 0 | | - | - |
| 15 | SP WIRE-70S | 0.07 | | 1.60 | 0 | | - | - |

Fig.3

EP 1 291 110 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 56069037 A
- US 5237145 A
- US 5922220 A
- US 5451737 A
- DE 2826270
- EP 0312056 A
- EP 0578018 B1